# EUROPÄISCHE PATENTSCHRIFT

(11) **EP 0 642 888 B1**
(45) Veröffentlichungstag und Bekanntmachung des Hinweises auf die Patenterteilung: **26.01.2000**
(21) Anmeldenummer: 94113941.2
(22) Anmeldetag: 06.09.1994
(51) Int. Cl.: B24C 3/06, B24C 9/00

(54) **Sandstrahlvorrichtung**
Sand-blasting device
Dispositif de sablage

(30) Priorität: 07.09.1993 CH 265093
(43) Veröffentlichungstag der Anmeldung: 15.03.1995
(73) Patentinhaber: CONCHITA HOLDING S.A., L-2133 Luxembourg (LU)
(72) Erfinder: Pizzinato, Dino F., L-2226 Luxembourg (LU)
(74) Vertreter: Freylinger, Ernest T.

(56) Entgegenhaltungen:
- EP-A- 0 010 431
- DE-A- 3 821 739
- FR-A- 1 414 659
- FR-A- 2 170 430
- FR-A- 2 560 262

## Beschreibung

Die Erfindung betrifft eine Sandstrahlvorrichtung zum trockenen Sandstrahlen von grösseren Teilen, wie zum Beispiel grösseren Konstruktionen, Bauwerken oder Fassaden.

In der FR-A-1.414.659 wird ausgeführt, dass man bis dahin beim Sandstrahlen für Fassaden und Bauwerke angefeuchteten Sand verwendet habe, damit kein Staub entsteht. Das feuchte Sandstrahlen habe jedoch schwerwiegende Nachteile wie zum Beispiel: Benetzen des Bauwerks, Aufweichen der Bausubstanz und Frostschadengefahr. Ausserdem beeinträchtige die Feuchtigkeit die Beurteilung des Ergebnisses. Man habe aber bis dahin auf das trockene Sandstrahlen wegen der Gefahr der Freisetzung von grösseren Staubmengen verzichten müssen. Um das trockene Sandstrahlen zu ermöglichen, wird eine den Bediener aufnehmende Kabine vorgeschlagen, aus der die Staubluft abgesaugt und sodann der Staub von der Luft trocken oder nass abgetrennt wird. Die Kabine ist einseitig zum Bauwerk hin offen und kann an das Bauwerk angeschlossen werden.

In der FR-A-2.560.262 ist eine Sandstrahlkabine gleicher Gattung beschrieben, die an einer Hebevorrichtung (z.B. einem Kran) aufgehängt ist. Eine Arbeitsöffnung an der Vorderseite der Kabine ist mit einer Plane umgeben, die durch eine aufblasbare Tragstruktur unterstützt wird. Die Plane legt sich rundum die Arbeitsöffnung an das zu reinigende Bauteil an und soll so den Austritt von Staub verhindern. Die Staubluft aus der Kabine wird durch Ventilatoren in der Kabinenrückwand abgesaugt, um anschliessend hinter der Kabinenrückwand nass entstaubt zu werden. Der hierbei entstehende Staubschlamm wird in einem Auslauftrichter unterhalb der Kabine aufgefangen und durch ein Rohr abgeführt.

Aus der FR-A-2170430 ist eine Vorrichtung zum Säubern und Polieren von großen, metallischen Flächen bekannt, welche keine Kabine zur Aufnahme eines Bedieners aufweist.

Es hat sich gezeigt, dass alle diese vorbekannten Massnahmen weder einen Staubausbruch zwischen Kabine und Bauwerk zuverlässig verhindern können, noch eine zuverlässige und ausreichende Staubabscheidung sicherzustellen vermögen.

Der Erfindung liegt die Aufgabe zugrunde eine Sandstrahlvorrichtung zu schaffen welche die Umwelt weniger belastet. Zur Lösung dieser Aufgabe wird die im Anspruch 1 gekennzeichnete Vorrichtung vorgeschlagen.

Der erfindungsgemäss über dem unteren Abschnitt der Dichtung an das Bauwerk anlegbare Staubförderer fördert den am zu sandstrahlenden Teil oder in dessen Nähe nach unten fallenden Staub (das heisst den abfallenden Sand, Schmutz und/oder abbröckelnde Partikel) von der Dichtung weg, so dass dieser Staub die Dichtung nicht belastet. Dadurch kann sich keine zu grosse Staubmenge auf der Dichtung ansammeln, so dass ein grösserer Staubausbruch zuverlässig in diesem kritischen Bereich vermieden wird. Der vom Staubförderer von der Arbeitsöffnung weg geförderte Staub wird in einen Bereich gefördert in welchem er von der abgesaugten Kabinenluft mitgenommen wird.

Der erfindungsgemässe Staubförderer ist vorzugsweise als Rüttelförderer ausgeführt. Er bildet voteilhaft eine schiefe Rutschebene aus, welche den unteren Abschnitt der Dichtung innen überspannt und mit einer Längskante an das zu sandstrahlende Teil in Arbeitsstellung anlegbar ist.

Der Staubföderer weist weiterhin vorzugsweise eine freie Längskante auf die im wesentlichen der Breite der Arbeitsöffnung entspricht. Diese Längskante ist vorteilhaft mit einem verformbaren Dichtelement versehen, wobei in Arbeitsstellung des Staubförderers dieses Dichtelement oberhalb des unteren Dichtungsabschnitts an das zu sandstrahlenden Teil anpressbar ist.

In einer bevorzugten Ausgestaltung ist der Staubförderer gelenkig mit der Kabine derart verbunden, dass er um eine Achse "O" in seine Arbeitsstellung herunterklappbar ist, respektiv aus seiner Arbeitsstellung hochklappbar ist. Durch ein Hochklappen des Staubförderers wird ein Staubausbruch beim Entfernen der Kabine vom zu sandstrahlenden Teil vermieden.

In einer bevorzugten Ausführung mündet der Staubförderer in eine Sammelkammer innerhalb der Kabine. Diese Sammelkammer ist dann nach oben vorteilhaft durch ein Gitterrost begrenzt, dessen Fläche in etwa dem Querschnitt der Kabine entspricht und das als Stehrost für den Bediener ausgebildet sein kann. Weiterhin ist diese Sammelkammer vorteilhaft mit der Absaugvorrichtung zum Absaugen von Staubluft aus der Kabine derart verbunden, dass sie von der abgesaugten Staubluft durchströmt wird und die Stäube des Staubförderers in die abgesaugte Kabinenluft beigemischt werden.

Zwecks Abdichtung der Kabinenöffnung am Bauteil kann, in an sich bekannter Weise, eine aufblasbare Dichtung am Rand der Arbeitsöffnung vorsehen werden. Der Hauptnachteil dieser aufblasbaren Dichtung, nämlich Staubausbrüche in ihrem unteren Bereich, wird durch den erfindungsgemässen Staubförderer wirksam beseitigt, ohne dafür auf einen aufwendigen Luftvorhang zurückgreifen zu müssen.

Die Staubluft wird von vorzugsweise radial fördernden Gebläsen aus der Kabine, respektiv der Sammelkammer für den Staub abgesaugt und durch eine Staubluft-Druckleitung in die Waschflüssigkeit einer Waschkammer eingeblasen. In dieser Waschkammer wird der Staub aus der Luft gewaschen während die Luft durch die Flüssigkeit hochsteigt.

Zur Verbesserung der Staubabscheidung sind mindestens zwei getrennte, mit Waschflüssigkeit bis zu einem Flüssigkeitsniveau füllbare und entleerbare, Waschkammern vorgesehen. In diese getrennten Waschkammern mündet je eine mit Staubluft beaufschlagbare, unter das Flüssigkeitsniveau reichende, Staubluftleitung. Die Waschkammern sind steuerbar mit Staubluft beaufschlagbar oder von der Staubluftzufuhr trennbar. Steuermittel sind ebenfalls vorgesehen um eine von der Staubluftzufuhr getrennte Waschkammer zu entleeren und wieder mit Waschflüssigkeit bis zum normalen Flüssigkeitsniveau zu füllen. In der Praxis kann dieser Wechsel jeweils nach wenigen Minuten erfolgen, so dass man mit einem relativ geringen Wasservolumen pro Kammer auskommt und trotzdem eine optimale Luftwäsche gewährleistet ist. Dadurch ist eine hervorragende Entstaubung bei einfacher Vorrichtung und geringem Gewicht der betriebsbereiten Kabine möglich.

Man kann zusätzlich die aus der Waschkammer austretende Luft absaugen, wenn dies wünschenswert oder nötig erscheint.

Der vorbeschriebene Staubförderer und die vorbeschriebene Nassabscheidung für die Staubluft können getrennt oder, vorzugsweise, gemeinsam zur Ausführung gelangen. Gelangen sie gemeinsam zur Ausführung ergänzen sie sich vorteilhaft um ein sauberes und zugleich sparsames Arbeiten zu gewährleisten. Weiterhin erlauben die vorerwähnten zwei Massnahmen eine einfach zu handhabende, sicher funktionierende, relativ leichte und preiswerte Vorrichtung zum trockenen Sandstrahlen zu schaffen.

Ein Ausführungsbeispiel der Erfindung wird nachstehend anhand der beigefügten, rein schematischen Zeichnung beschrieben.

Es zeigen:
Figur 1 einen vertikalen Schnitt durch eine erfindungsgemässe Vorrichtung; und
Figur 2 eine Ansicht der beiden Waschkammern der Vorrichtung nach Figur 1 im abgedeckten Zustand.

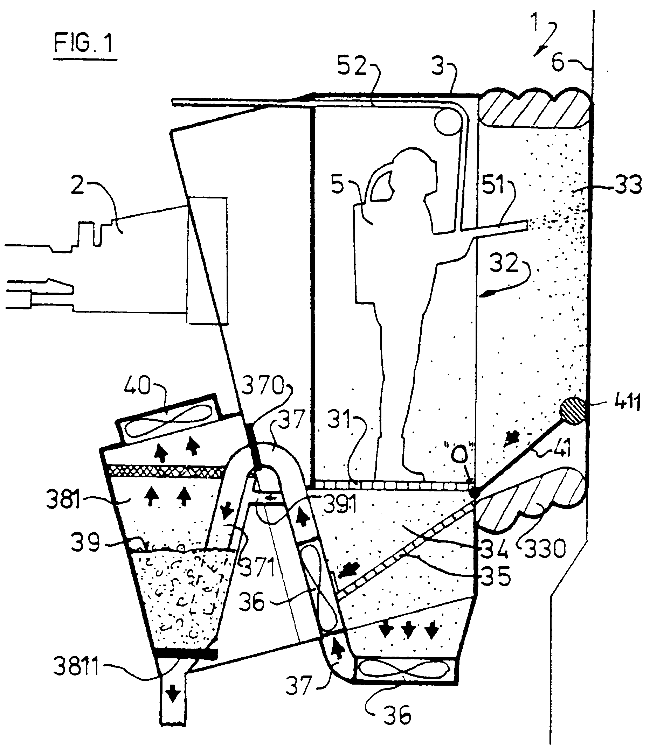

Figur 1 zeigt eine erfindungsgemässe Sandstrahlvorrichtung 1 mit einer Kabine 3 für einen Bediener 5. Eine solche Sandstrahlvorrichtung 1 kann zum Beispiel zur Reinigung von Bauwerken oder Fassaden verwendet werden. Die Kabine 3 der Vorrichtung 1 ist dazu an einem Ausleger 2 eines Krans in an sich bekannter Weise derart befestigt, dass sie parallel zu einer Fassade 6 bewegt werden kann.

Auf einem Stehrost 31 der Kabine 3 nimmt der in einen Schutzanzug gekleidete Bediener 5 Platz. In Figur 1 ist er in Arbeitsstellung gezeigt, in welcher er mit einem Sandstrahler 51 ein Sand-Druckluft-Gemisch durch eine vordere Arbeitsöffnung 32 der Kabine 3 auf die Fassade 6 strahlt. Der Sandstrahler 51 wird durch eine flexible Zuleitung 52 mit dem Sand-Druckluft-Gemisch versorgt.

Die Kabine 3 liegt mit einer Dichtung 33, die den Rand der Arbeitsöffnung 32 allseitig umgibt, an der Fassade 6 an. Bei dieser Dichtung 33 handelt es sich vorzugsweise um eine aufblasbare Dichtung die an die Oberfläche der Fassade 6 witgehend formschlüssig anpressbar ist. Die Luft aus der Kabine 3 wird über Gebläse 36 und 40 absaugt, so dass über verbleibende Undichtigkeiten zwischen Fassade 6 und Dichtung 33 saubere Luft in die Kabine nachströmt und so ein Austritt staubbeladener Luft zwischen Fassade 6 und Dichtung 33 weitgehend vermieden wird.

Ein wesentlicher Teil des Staubs (das heisst des Sands und der durch den Sand und die Druckluft von der Fassade gelösten Partikel) fällt in Nähe der Fassade 6 nach unten. Hier wird dieser Teil des Staubs durch einen an die Fassade 6 angelegten Staubförderer 41 direkt aufgefangen und oberhalb des unteren Dichtungsabschnitt 330 (siehe Pfeil) in eine Sammelkammer 34 unter dem Stehrost 31 geleitet. Dadurch kann sich keine zu grosse Staubmenge auf dem unteren Dichtungsabschnitt 330 ansammeln, so dass ein grösserer Staubausbruch in diesem kritischen Bereich, zum Beispiel beim Verschieben der Kabine 6 relativ zur Fassade 6, wirksam vermieden wird.

Wie aus Figur 1 ersichtlich, bildet der Staubförderer 41, in seiner Arbeitsstellung in der er an die Fassade 6 angelegt ist, eine schiefe Rutschfläche für den abfallenden Staub aus. Diese Rutschfläche überspannt den unteren Dichtungsabschnitt 330 über seine ganze Breite und Länge und weist ein Gefälle zur Sammelkammer 34 auf.

Aus Figur 1 ist ebenfalls ersichtlich, dass die untere Längskante des Staubförderers 41 gelenkig mit der Kabine 3 verbunden ist und der Staubförderer 41 somit um eine Achse "O" relativ zur Kabine 3 aus seiner Arbeitsstellung hochklappbar ist. Die gegenüberliegende freie Längskante des Staubförderes 41 ist dagegen mit einem Dichtelement 411 versehen. In der dargestellten Ausführung ist der Staubförderer 41 demnach aus einer fast senkrechten Wartestellung um die Achse "O" in die gezeigte Arbeitsstellung herunterklappbar, wobei in dieser Arbeitsstellung das Dichtelement 411, vorzugsweise eine verformbare Dichtung (wie zum Beispiel eine aufblasbare Dichtung oder eine Weichdichtung) dichtend gegen die Fassade 6 gepresst wird. Der Staubförderer 41 ist weiterhin vorteihaft mit einer (nicht gezeigten) Rüttelvorrichtung verbunden um das Abrutschen des Staubs in die Sammelkammer 34 zu begünstigen.

Der Staub der in der Kabine 3 ausserhalb des Bereichs des Staubförderers absinkt gelangt grösstenteils mit der Kabinenabluft durch den Stehrost 31 ebenfalls in die Sammelkammer 34. In dieser Sammelkammer 34 befindet sich vorteilhaft ein Mischrost 35. Dieser sorgt dafür, dass der vom Staubförderer 41 in die Sammmelkammer 34 eingeleitete Staub besser von der Kabinenabluft aufgenommen wird.

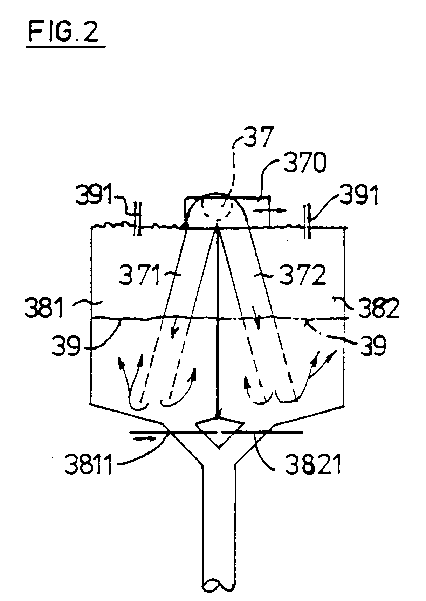

Ein oder mehre Radialgebläse 36 saugen Staub und Luft aus der Sammelkammer 34 und fördern das Staub-Luft-Gemisch durch eine Haupt-Staubluftleitung 37 in Richtung eines 3-Wege-Schiebers 370. Je nach der Stellung des 3-Wege-Schiebers 370 gelangt das Staub-Luft-Gemisch aus der Haupt-Staubluftleitung 37 in eine erste oder zweite Wasch-Staubluftleitung 371 oder 372 die jeweils in eine erste oder zweite Waschkammer 381 oder 382 münden (siehe Figur 2). Die beiden Waschkammern 381 und 382 sind mit einer Flüssigkeit, zum Beispiel Wasser, bis zu einem Flüssigkeitsniveau 39 gefüllt. Die Mündungen der beiden Wasch-Staubluftleitungen 371 und 372 befinden sich dabei unterhalb des Flüssigkeitsniveaus 39. Die beiden Waschkammern 381 und 382 werden über den Schieber 370 abwechselnd mit dem Staub-Luft-Gemisch beaufschlagt. In der mit dem Staub-Luft-Gemisch beaufschlagten Waschkammer 381 und 382 wird der Staub in der darin bis zum Niveau 39 stehenden Flüssigkeit aus der Luft herausgewaschen. Die gereinigte Luft steigt gelangt über einen Ventilator 40 aus der betreffenden Waschkammer 381 oder 382 ins Freie.

Wenn die Waschflüssigkeit einer Waschkammer 381 oder 382 mit Staub gesättigt ist, wird durch den Schieber 370 das Staub-Luftgemisch in die andere Waschkammer umgeleitet. Die jetzt ruhende Waschkammer 381 oder 382 wird über einen Ablass-Schieber 3811 oder 3821 entleert und danach durch eine Füll-Leitung 391 wieder bis zum Niveau 39 gefüllt. So wird jewils eine der beiden Waschkammern 381 und 382 zum Waschen der Staubluft benützt, während bei der anderen die Waschflüssigkeit ausgetauscht wird. Man kann also mit einem relativ geringen Volumen an Waschflüssigkeit eine kontinuierliche Reinigung gewährleisten. Dadurch hat die vorgeschlagene Sandstrahlvorrichtung, trotz ausgezeichneter Staubabscheidung, wesentliche Gewichtsvorteile.

In einem nicht dargestellten separaten Auffang- und Klärbecken ausserhalb der Kabine 3 kann sich der Staub anschliessend aus der Waschflüssigkeit absetzen, so dass dass die Waschflüssigkeit geklärt wird. Man braucht schliesslich nur noch einen Schlamm mit relativ wenig Flüssigkeit zur Entsorgung abzutransportieren, während die geklärte Flüssigkeit separat entsorgt werden kann oder sogar wieder in die Waschkammern eingespeist werden kann.

Sowohl der Staubförderer 41 als auch die vorgestellte Waschvorrichtung für die Kabinenabluft reduzieren demnach wesentlich die Umweltbelastung beim trockenen Sandstrahlen von grösseren Teilen, wie zum Beispiel Konstruktion, Bauwerken oder Fassaden.

## Patentansprüche

1. Sandstrahlvorrichtung (1) zum trocknen Sandstrahlen von grösseren Teilen, wie zum Beispiel Bauwerken oder Fassaden, mit einer Kabine (3) zur Aufnahme eines Sandstrahlers (51) mit Bediener (5), wobei die Kabine (3) eine Arbeitsöffnung (32), deren Rand von einer an das zu sandstrahlende Teil (6) anlegbare Dichtung (33) allseitig umgeben ist, und mindestens eine Absaugvorrichtung (36) zum Absaugen von Staubluft aus der Kabine (3) aufweist, **gekennzeichnet**
durch einen oberhalb des unteren Abschnitts (330) der Dichtung (33) angeordneten Staubförderer (41), der in Arbeitsstellung an das zu sandstrahlende Teil (6) anlegbar ist und die im Bereich dieses unteren Dichtungsabschnitts (330) abfallenden Stäube weitgehend auffängt und in einen Bereich fördert, aus welchem sie von der abgesaugten Staubluft aus der Kabine (3) mitgenommen werden.

2. Sandstrahlvorrichtung nach Anspruch 1, dadurch gekennzeichnet, dass der Staubförderer eine schiefe Rutschebene ausbildet, welche den unteren Dichtungsabschnitt (330) der Dichtung (33) überspannt und mit einer Längskante an das Teil (6) anlegbar ist.

3. Sandstrahlvorrichtung nach Anspruch 1 oder 2, dadurch gekennzeichnet, dass der Staubförderer (41) mit einer Rüttelvorrichtung funktionsmässig verbunden ist.

4. Sandstrahlvorrichtung nach einem der Ansprüche 1 bis 3, dadurch gekennzeichnet, dass der Staubförderer (41) gelenkig mit der Kabine (3) derart verbunden ist, dass er um eine Achse "O" in seine Arbeitsstellung herunterklappbar ist und aus seiner Arbeitsstellung hochklappbar ist.

5. Sandstrahlvorrichtung nach einem der Ansprüche 1 bis 4, dadurch gekennzeichnet, dass der Staubförderer (41) eine Längskante aufweist, die im wesentlichen der Breite der Arbeitsöffnung (32) entspricht und die mit einem verformbaren Dichtelement versehen ist, wobei in Arbeitsstellung dieses Dichtelement oberhalb des unteren Dichtungsabschnitts (330) an das zu sandstrahlenden Teil (6) anpressbar ist.

6. Sandstrahlvorrichtung nach einem der Ansprüche 1 bis 5, dadurch gekennzeichnet, dass der Staubförderer (41) derart angeordnet ist, dass er die aufgefangenen Stäube in eine Sammelkammer (34) innerhalb der Kabine (3) fördert, welche mit der Absaugvorrichtung (36) zum Absaugen von Staubluft aus der Kabine (3) derart in Verbindung steht, dass die Stäube des Staubförderers (41) der aus der Kabine (3) abgesaugten Staubluft beigemischt werden.

7. Sandstrahlvorrichtung nach Anspruch 6, dadurch gekennzeichnet, dass die Sammelkammer (34) nach oben zur Kabine (3) hin durch einen Gitterrost (31) begrenzt ist, der als Stehfläche für den Bediener (5) ausgebildet ist.

8. Sandstrahlvorrichtung nach Anspruch 7, dass die Sammelkammer (34) mit der Absaugvorrichtung (36) zum Absaugen von Staubluft aus der Kabine (3) derart verbunden ist, dass sie von der abgesaugten Staubluft durchströmt wird, wobei die aus der Kabine (3) abgesaugte Staubluft über den Gitterrost (31) in die Sammelkammer (34) einströmt, und in der Sammelkammer (34) eine Mischvorrichtung (35) zum Beimischen Stäube des Staubförderers (41) in die abgesaugte Staubluft vorgesehen ist.

9. Sandstrahlvorrichtung nach einem der Ansprüche 1 bis 8, gekennzeichnet durch, mindestens zwei je mit einer Waschflüssigkeit bis zu einem Flüssigkeitsniveau (39) füllbare und entleerbare Waschkammern (381, 382), in die je eine wahlweise mit Staubluft beaufschlagbare, unter das Flüssigkeitsniveau (39)reichende Staubluftleitung (37, 371, 372) einmündet, wobei Steuermittel vorgesehen sind, um die jeweils von der Staubluftzufuhr getrennte Waschkammer (381, 382) zu entleeren und wieder mit Waschflüssigkeit bis zum Flüssigkeitsniveau (39) zu füllen.

10. Sandstrahlvorrichtung nach Anspruch 9, dadurch gekennzeichnet, dass eine separate Absaugvorrichtung (40) den Waschkammern (381, 382) derart zugeordnet ist, dass sie die gereinigte Luft oberhalb des Flüssigkeitsniveaus (39) abzieht.

11. Sandstrahlvorrichtung nach einem der Ansprüche 1 bis 10, dadurch gekennzeichnet, dass die Absaugvorrichtung (36) zum Absaugen von Staubluft aus der Kabine (3) radial fördernde Gebläse (36) aufweist deren Druckseite an eine Staubluftleitung (37, 371, 372) angeschlossen ist die in einen Nassabscheider mündet.

12. Sandstrahlvorrichtung nach einem der Ansprüche 1 bis 11, dadurch gekennzeichnet, dass die Dichtung (33) die die Arbeitsöffnng (32) umgibt, eine aufblasbare Dichtung umfasst.

## Claims

1. Sandblasting device (1) for dry sandblasting of large parts, e.g. structures or facings, with a booth (3) to receive a sandblaster (51) with its operators (5), the booth (3) having a working opening (32), the edge of which is surrounded on all sides by a seal (33), which can be placed against the part (6) to be sandblasted, and at least one exhausting device (36) for removal of dust-laden air from the booth (3), **characterised**
by a dust conveyor (41) arranged above the lower section (330) of the seal (33), which can be placed against the part (6) to be sandblasted in the working position, and collects a large proportion of the dust falling in the area of this lower seal section (330) and conveys it to an area from which it is removed from the booth (3) with the exhausted dust-laden air.

2. Sandblasting device according to claim 1, characterised in that the dust conveyor forms an inclined sliding plane, which covers the lower seal section (330) of the seal (33) and can be placed with a longitudinal edge against the part (6).

3. Sandblasting device according to claim 1 or 2, characterised in that the dust conveyor (41) is connected functionally to a vibrator.

4. Sandblasting device according to one of claims 1 to 3, characterised in that the dust conveyor (41) is pivoted on the booth (3) in such a way that it can be swung down about an axis "O" into its working position and can be raised from its working position.

5. Sandblasting device according to one of claims 1 to 4, characterised in that the dust conveyor (41) has a longitudinal edge, which corresponds essentially to the width of the working opening (32), and is provided with a deformable sealing element, whereby the latter can be pressed against the part (6) to be sandblasted above the lower seal section (330) in the working position.

6. Sandblasting device according to one of claims 1 to 5, characterised in that the dust conveyor (41) is arranged in such a way that it conveys the collected dust into a collecting chamber (34) within the booth (3), which is connected to the exhausting device (36) for removal of dust-laden air from the booth (3) in such a way that the dust of the dust conveyor (41) is mixed with the dust-laden air removed from the booth (3).

7. Sandblasting device according to claim 6, characterised in that the collecting chamber (34) is bounded at the top from the booth (3) by a grating (31), which is designed as the standing area for the operator (5).

8. Sandblasting device according to claim 7, characterised in that the collecting chamber (34) is connected to the exhausting device (36) for removal of dust-laden air from the booth (3) in such a way that the exhausted dust-laden air passes through it, the dust-laden air exhausted from the booth (3) flowing via the grating (31) into the collecting chamber (34), and a mixing device (35) for mixing dust from the dust conveyor (41) into the exhausted dust-laden air is provided in the collecting chamber (34).

9. Sandblasting device according to one of claims 1 to 8, characterised by at least two washing chambers (381,382), each of which can be filled with a washing liquid to a level (39) and emptied, into which a dust-laden air line (37,371,372), terminates, which can admit alternatively dust-laden air and extends under the liquid level (39), control means being provided to empty the washing chambers (381,382) separated from the dust-laden air supply and fill it again with washing liquid to the liquid level (39).

10. Sandblasting device according to claim 9, characterised in that a separate exhausting device (40) is assigned to the washing chambers (381,382) in such a way that it removes the cleaned air above the liquid level (39).

11. Sandblasting device according to one of claims 1 to 10, characterised in that the exhausting device (36) for removal of dust-laden air from the booth (3) has a radially conveying blower (36), the pressure side of which is connected to a dust-laden air line (37,371,372), which terminates in a wet separator.

12. Sandblasting device according to one of claims 1 to 11, characterised in that the seal (33), which surrounds the working opening (32), comprises an inflatable seal.

## Revendications

1. Dispositif de sablage (1) pour le sablage à sec d'objets de dimensions plus importantes, tels que des bâtiments ou des façades, comportant une cabine (3) destinée à recevoir un appareil de sablage (51) avec un opérateur (5), la cabine (3) présentant une ouverture de travail (32), dont le bord est entouré, sur tous les côtés, d'une garniture d'étanchéité (33) pouvant être placée contre l'objet à sabler (6) ainsi qu'au moins un dispositif d'aspiration (36) pour aspirer l'air poussiéreux de la cabine (3), **caractérisé par**
un convoyeur de poussière (41) disposé au-dessus de la section inférieure (330) de la garniture d'étanchéité (33) qui peut être placée, en position de travail, contre l'objet à sabler (6), et qui capte une grande partie des poussières tombant dans la zone de cette section inférieure de la garniture d'étanchéité (330) et les transporte dans une zone, de laquelle elles sont entraînées par l'air poussiéreux aspiré de la cabine (3).

2. Dispositif de sablage selon la revendication 1, caractérisé en ce que le convoyeur de poussière forme un plan incliné qui recouvre la section inférieure (330) de la garniture d'étanchéité (33) et qui peut être placé, avec une arête longitudinale, contre l'objet (6).

3. Dispositif de sablage selon la revendication 1 ou 2, caractérisé en ce que le convoyeur de poussière (41) est connecté, de façon fonctionnelle, à un dispositif vibrant (41).

4. Dispositif de sablage selon une des revendications 1 à 3, caractérisé en ce que le convoyeur de poussière (41) est connecté par articulation à la cabine (3) de façon qu'il puisse être abaissé en position de travail et relevé hors de la position de travail autour d'un axe 〈〈 O 〉〉.

5. Dispositif de sablage selon une des revendications 1 à 4, caractérisé en ce que le convoyeur de poussière (41) présente une arête longitudinale qui correspond essentiellement à la largeur de l'ouverture de travail (32) et qui est pourvue d'un élément d'étanchéité déformable qui peut être pressé contre l'élément à sabler (6) au-dessus de la section inférieure (330) de la garniture d'étanchéité.

6. Dispositif de sablage selon une des revendications 1 à 5, caractérisé en ce que le convoyeur de poussière (41) est disposé de manière qu'il transporte les poussières captées dans une chambre collectrice (34) à l'intérieur de la cabine (3), qui est reliée au dispositif d'aspiration (36) servant à aspirer de l'air poussiéreux de la cabine (3) de manière que les poussières du convoyeur de poussière (41) soient mélangées à l'air poussiéreux aspiré de la cabine (3).

7. Dispositif de sablage selon la revendication 6, caractérisé en ce que la chambre collectrice (34) est limitée vers le haut, en direction de la cabine (3), par une grille (31) servant d'emplacement pour l'utilisateur (5).

8. Dispositif de sablage selon la revendication 7, caractérisé en ce que la chambre collectrice (34) est reliée au dispositif d'aspiration (36) pour aspirer de l'air poussiéreux de la cabine (3) de manière qu'elle soit traversée par l'air poussiéreux aspiré, l'air poussiéreux aspiré de la cabine (3) affluant dans la chambre collectrice (34) par la grille (31), et en ce que dans la chambre collectrice (34) est prévu un dispositif mélangeur (35) pour mélanger les poussières du convoyeur de poussière (41) à l'air poussiéreux aspiré.

9. Dispositif de sablage selon l'une des revendications 1 à 8, caractérisé par au moins deux chambres de lavage (381, 382) pouvant être remplies avec un liquide de lavage jusqu'à un niveau de liquide (39) et pouvant être vidangées, dans chacune desquelles aboutit au moins une conduite d'air poussiéreux (37, 371, 372), en dessous du niveau de liquide (39), lesdites conduites d'air poussiéreux pouvant débiter alternativement un débit d'air poussiéreux, des moyens de commande étant prévus pour vidanger la chambre de lavage (381, 382) qui est séparée de l'alimentation en air poussiéreux et pour la remplir à nouveau de liquide de lavage jusqu'au niveau de liquide (39).

10. Dispositif de sablage selon la revendication 9, caractérisé en ce qu'un dispositif d'aspiration séparé (40) est associé aux chambres de lavage (381, 382) de manière qu'il aspire l'air purifié au-dessus du niveau de liquide (39).

11. Dispositif de sablage selon l'une des revendications 1 à 10, caractérisé en ce que le dispositif d'aspiration (36) pour aspirer de l'air poussiéreux de la cabine (3) présente des souffleries à refoulement radial (36) dont le côté de refoulement est raccordé à une conduite d'air poussiéreux (37, 371, 372) qui débouche dans un séparateur humide.

12. Dispositif de sablage selon une des revendications 1 à 11, caractérisé en ce que la garniture d'étanchéité (33), qui entoure l'ouverture de travail (32) comporte un joint d'étanchéité gonflable.
